# EUROPEAN PATENT APPLICATION

(11) **EP 1 821 242 A1**
(43) Date of publication of application: **22.08.2007**
(21) Application number: 06101722.4
(22) Date of filing: 15.02.2006
(51) Int. Cl.: G06K 19/077

(54) **Contactless multi-frequency transponder unit, its electronic module and method for manufacturing the unit.**

(71) Applicant: Assa Abloy Identification Technology Group AB, 107 23 Stockholm (SE)
(72) Inventor: AYALA, Stéphane, 1607, Palézieux Gare (CH); CURTY, Jari-Pascal, 1260, Nyon (CH)
(74) Representative: Grosfillier, Philippe

(57) **Abstract**

The contactless transponder unit (6) comprises a chip module (1), a first antenna (7) connected to said two upper conductive contact zones (4) of the chip module (1) and a second antenna (8) connected to said two lower conductive contact zones (5) of the chip module (1). The chip is configured in such a way as to operate the first antenna (7) at a first frequency range and the second antenna (8) at a second frequency range, the first frequency range being different than the second frequency range.

## Description

### Field of the Invention

The invention relates to a module for a contactless transponder unit, a contactless transponder unit with such a module and methods of manufacturing such contactless transponder unit. In particular, the invention concerns hybrid frequency contactless transponder units. By hybrid is here meant contactless transponder units having two different antennas operating in two different frequency ranges. Contactless smart cards are one of the particular embodiments of the invention.

### State of the art

The different transmission frequencies of transponders are classified into three basic ranges:
- Low Frequency (LF): 30 - 300 kHz
- High Frequency (HF): 3 - 30 MHz (also called Radio Frequency (RF))
- Ultra High Frequency: 300 MHz - 3 GHz (also including Microwave (>3 GHz))

LF and HF antennas are typically loop antennas (made of wire or band), whereas UHF antennas have more varied forms (dipole, patch, slot antenna, ...).

Having systems working at many of these different frequencies ranges are a logical follow up of this differentiation. Putting a plurality of mono-range transponders on the same object (support) has long since been state-of-the-art according, for example, to EP 1 267 303 (see paragraph [0003]).

Hybrid frequency transponders, having many antennas working in different frequency ranges and being operated by a single integrated circuit (IC), are the logical second generation step.

In fact, hybrid frequency contactless transponder units have been state-of-the-art since more than one decade. But as apparently the demand on the market remained marginal for a long time, this kind of products never reached mass production volumes.

The document JP8044831 (1994) describes the principle of hybrid frequency cards, in particular with one UHF/microwave antenna and one LF antenna.

The document US 6,100,788 (1997) describes essentially the same, but with some additional details about the structure of the transponder and the control logic.

In document DE 196 28 802 (1996), the frequency differentiation is coupled to the transmission process, as it shows a LF reception antenna and an UHF emission antenna .

In document EP 1 336 158 (2000), the planar positioning of the different antennae, and in particular their inter-connection is shown.

In document US 2004/0061655, hybrid frequency features are subordinated to the separable mechanical structure of the transponder. In fact, this transponder is not able to operate in several frequencies at the same time.

None of these documents show details of how such transponders have to be structured to be suited for mass production processes. In particular, no details about the connection of the antennas to the chip/module or about the structure of chip module needed are given.

On the other hand, there is considerable state-of-the-art regarding another kind of dual mode transponders: the dual contact and non-contact cards. Here methods of manufacture, chip module structures and connections are therefore abundantly documented as for example in EP 0 671 705, WO97/34247, WO00/25265 and JP2004199114.

All these documents describe dual contact and non-contact chip modules, having an upper and a lower surfaces with contact zones, wherein the plurality (8 according to ISO 7816) of upper contacts zones are for contact-using operations and wherein the two lower contact zones are to be connected to the two extremities of an antenna for the non-contact operation.

The central idea of the invention is to adapt modules, transponder structures and methods of manufacture used for dual contact and non-contact cards to the context and the needs of the hybrid frequency contactless transponder units.

### Summary of the invention

It is therefore an aim of the present invention to improve hybrid frequency contactless transponder units and also to improve the known techniques of manufacturing such units.

It is another aim of the present invention to provide a simple and cheap chip module for hybrid frequency transponder units.

An idea of the invention is to use a chip module being connectable to two different antennas by two pairs of conductive contact zones. Each pair of contact zones, all being connected to the chip, is placed one side of the module. Since the connections of the two antennas to the module are geometrically clearly separated, the risk of short-circuit is lower, transponder units being produced with such module are more reliable and many efficient and cost saving different methods of manufacture of a contactless transponder unit with two antennas are possible.

The invention will be better understood in the following description together with the accompanying drawings.

### Brief description of the drawings

Figure 1 shows two different embodiments of chip modules of the invention
Figure 2 shows one upper view and one side view of a contactless transponder unit of the invention
Figure 3 illustrates a first method of manufacturing according to the invention, showing first a developed view of a chip module connected to wire antenna ready to be connected to a second antenna being reported on a substrate, and secondly a side view of the final mounting of all elements together.

Figure 4 shows a cross section of a transponder unit of the invention, where a chip module is to be placed in the recess of a central layer and connected to two antennas reported each on a substrate to be mounted on both sides of the central layer, all this according a second method of manufacturing of the invention.

Figure 5 shows a chip module mounted in the recess of a layer with antennas printed over each surface of the layer and on the contact zones of the module, with an upper and lower view and a side view following the section line A-A.

### Detailed description of the invention

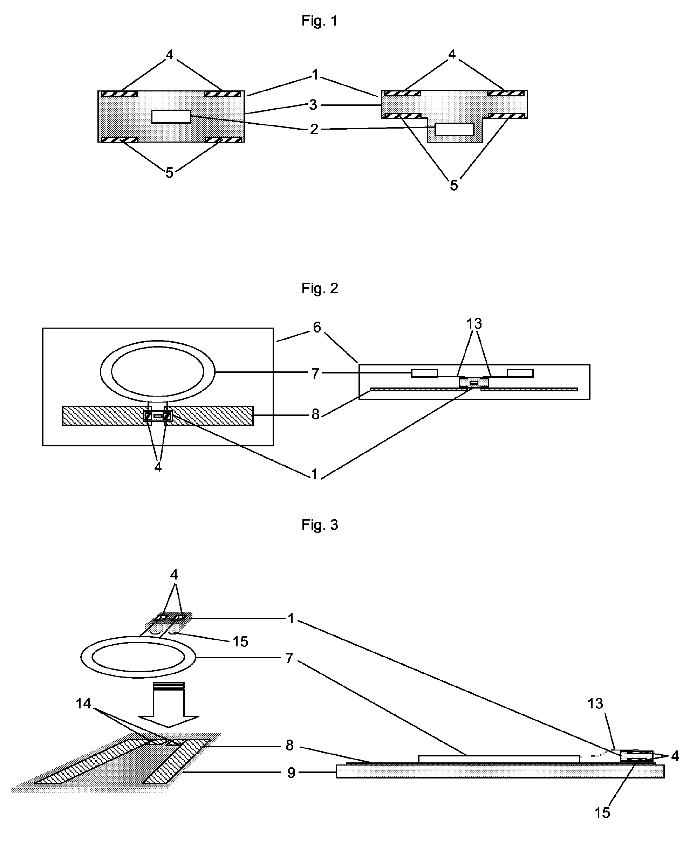

In figure 1, two different embodiments of a chip module 1 of the invention are represented. As with all transponder chip modules, they have a transponder chip 2 embedded in an insulating housing 3, the chip module being connected (not shown) to external conductive contact zones 4 and 5 at the surface of the housing. There are, in fact, two pairs 4 and 5 of contact zones, each positioned on one of the upper and lower surface of the chip module 1. The housing 3 can have many shapes, for example a square with two well defined upper and lower surface as in the left side of the figure, or also T-shaped as in the right side of the figure, in which the lower surface shows different levels. The contact zones 4 and 5 can be placed anywhere on these surfaces, relevant is only that each pair is placed on an opposite side of the chip module 1. A symmetrical position of the contact zones as in figure 1 can help, but is not required. The internal structures of the chip module, as in particular the connections of the contact zones 4 and 5 to the chip, are not discussed/shown here but are known in the art.

The chip module 1, and more particularly the chip 2 itself, are configured to operate with a first antenna connected 7 to the upper contact zones 4 at a first frequency range and to operate with a second antenna 8 connected to the lower contact zones 5 at a second different frequency range. As shown in figure 2, the chip module 1 and its two antennas 7, 8 are packaged together as in a contactless transponder unit 6, which can have for example the form of a card. In this case, the first antenna is a wire loop antenna 7 that is connected to the upper contact zones 4 of the module 1 by the two ends 13 of the wire, and the second antenna is a dipole antenna made of two symmetrical planar conductive surfaces on which the module is mounted. In figure 2, both antennas 7, 8 are well separated inside the structure of the contactless transponder card 6. The wire loop antenna 7 is typically a LF (125-135 kHz) antenna, whereas the dipole antenna 8 is an UHF (868-915 MHz) antenna. All other kind of paired antennas are possible, as long as they are not operated in the same frequency range. Since the two antennas are not positioned at the same higher level and are electrically insulated from each other, there is no particular restriction regarding the geometry of the antennas. Planar antennas are particularly advantageous in case of a contactless card, but the scope of the invention is not restricted to them.

There are many ways to manufacture a hybrid frequency contactless transponder unit, a particularly advantageous one being illustrated in figure 3. A wire loop antenna 7 is connected to the upper contact zones 4 of the module 1. On the other side, a dipole antenna 8 is reported on an insulative substrate 9.

"Reported" means in relation to the present the invention any technique suitable to form or attach an antenna structure on the substrate. The antenna elements can be:
- printed (by screen printing, by ink jet, ...)
- etched (plasma, electro-plating, ...)
- embedded (in case of wires for example)
- fixed (conductive band or metal surface for example)

If as in figure 3, the wire used for the loop antenna 7 has an insulation coating (not shown), there is no need for an additional insulating separation between the antennas 7 and 8. In such a case, the module 1 connected to the wire antenna 7 can be directly mounted on the second antenna 8 reported on the substrate 9. The second antenna 8 structure shows two contact terminals 14 adapted for mounting the lower contact zones 5 of the module 1 on them. In the example of figure 3, this is achieved by means of a conductive adhesive 15. Balls or studs bonding or even direct bonding (depending on the nature of the material) can also for example be used among other possible techniques. On the right side of the figure, the wire antenna (with insulation coated wire) relays directly to the substrate 9 and/or partially on the antenna 8. Such a structure and manufacturing process is very simple, efficient and reliable.

In other cases, as for example when the wire is not insulation coated, an insulation layer with a recess to mount the module will be used to isolate both antenna structures. Different embodiments of such processes are discussed below.

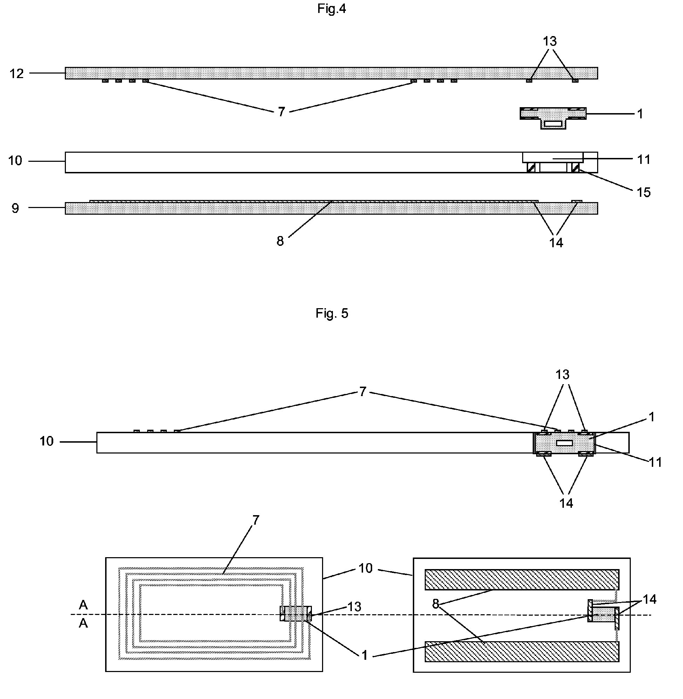

As represented in figure 4, an insulation substrate 9 with an antenna structure 8 is provided. The antenna structure 8 shows two contacts terminals 14. An insulation layer 10 is provided with a recess 11 and mounted on the substrate 9. In this particular embodiment, the recess 11 has a T-shape (fitting the chip module 1) and comprises two connection shafts 15. Once the layer 9 is mounted on the substrate 9 and the module 1 is mounted in the recess 11, the conductive material filling the two shafts 15 achieves the electrical contact between the terminals 14 of the antenna 8 and the lower contact zones 5 of the module 1. Many different types of recesses 11, with or without shafts for example, are usable, as shown in the state-of-the-art cited above for dual contact and non-contact cards.

Further shown in figure 4 is an upper substrate 12 having an antenna 7 reported on its lower surface. Here, the antenna 7 is typically a HF loop antenna (with 4 loops) and two ends 13 serving as contacts terminals to be connected to the upper conductive zones 4 of the module when the substrate 12 is mounted on the layer 10. All possible combinations between the different layers 9, 10 and 12 and the recess 11 are possible. Even, for example, using two symmetrical layers 10 with two shafts 15 each, the two substrates 9 and 12 being mounted on the external side of the two layers 10.

In another variant, the antenna 7 can be printed over the upper surface of the layer 10, whereby the two contacts terminals 13 of the antenna 7 are each printed directly on one of the two upper conductive contact zones 4 of the module 1 (the module 1 being previously mounted in the recess). In such a case, the substrate 12 is optional and serves even as a protection sheet as for example in the case of a contactless card.

The last embodiment shown in sectional view A-A in figure 5 illustrates a particular advantageous method of manufacture of a hybrid frequency contactless transponder unit 6. The module 1 is fixed in a recess of the insulation layer 10 in such way that the two upper 4 and the lower conductive contact zones are substantially even with the upper or the lower surface of the layer respectively. Then the antennas 7 and 8 resp. are printed each on each side of the layer 9, wherein the two contact terminals 13 and 14 resp. of each antennas are printed directly on the conductive contact zones 4 and 5 resp. of the module 1 in order to achieve the electrical connection between the antennas 7 and 8 resp. and the chip module 1

It is advantageous that the contacts zones are even with the respective surfaces of the layer in order allow easy printing of the terminals of the antennas 7 and 8 directly on the contact zones. If, however, the different elements are not even, the printing technique and the ink used are to be adapted to allow level changes without disturbing the electrical continuity of the antennas structures.

The two lower drawings in figure 5 show a lower and upper view of the contactless transponder unit 6. The upper view comprises a HF loop printed antenna 7 and the lower face comprises UHF dipole printed antenna 8. Even if the antennas chosen are only non restrictive examples, it has to be noted, that they are slightly different with respect to the one presented in the other figures. In particular the loop antenna 7 has a small part of all its loops printed over the module 1. Only the terminals 13 are printed on the conductive contact zones 4, as the other loops are printed on the non conductive part of the housing 3 of the module 1.

List of numerical references:
- 1: chip module
- 2: transponder chip
- 3: housing
- 4: upper conductive contact zones
- 5: lower conductive contact zones
- 6: contactless transponder unit
- 7: first antenna
- 8: second antenna
- 9: first insulation substrate
- 10: insulation layer
- 11: recess
- 12: second insulation substrate
- 13: contact terminal of the first antenna
- 14: contact terminal of the second antenna
- 15: connection mean

## Claims

1. Chip Module (1) for a contactless transponder unit (6) comprising a transponder chip (2) in an insulating housing (3), the housing having an upper an a lower surface, wherein the upper surface has two upper conductive contact zones (4) to be connected to a first antenna (7), the lower surface has two lower conductive contact zones (5) to be connected to a second antenna (8), and wherein the chip is configured in such a way as to operate the first antenna (7) at a first frequency range and the second antenna (8) at a second frequency range, the first frequency range being different from the second frequency range.

2. Contactless transponder unit (6) comprising a chip module (1) according to claim 1, a first antenna (7) connected to said two upper conductive contact zones (4) of the chip module (1) and a second antenna (8) connected to said two lower conductive contact zones (5) of the chip module (1), and wherein the chip is configured in such a way as to operate the first antenna (7) at a first frequency range and the second antenna (8) at a second frequency range, the first frequency range being different than the second frequency range.

3. Contactless transponder unit (6) according to claim 2, wherein one of the antennas is a loop antenna (7).

4. Contactless transponder unit (6) according to claim 3, wherein the loop antenna (7) is a wire antenna.

5. Contactless transponder unit (6) according to claim 4, wherein the wire of the wire antenna (7) has an insulating coating and wherein the wire antenna (7) relays directly to a substrate (9) on which the second antenna (8) is reported.

6. Contactless transponder unit (6) according to one of claim 2 to 4, wherein both antennas (7,8) are separated by an insulating layer (10) having a recess (11) in which the chip module (1) is at least partially mounted.

7. Contactless transponder unit (6) according to claim 6, wherein both antennas (7,8) are printed.

8. Method of manufacturing a contactless transponder unit according to one of claims 2 to 5, said method comprising the following steps:
• connecting a first wire antenna to said two upper conductive contact zones of the chip module
• reporting a second antenna on a insulating substrate , the second antenna having two contact terminals
followed by the step of
• mounting the chip module with the first wire antenna on the substrate such that said two lower conductive contact zones of the chip module are electrically connected to the two contact terminals of the second antenna.

9. Method of manufacturing a contactless transponder unit according to one of claims 2 to 7, the method of manufacturing comprising the following steps:
• reporting a first antenna on an insulating substrate (9), the first antenna having two contact terminals
• mounting an insulating layer over the first antenna , in which layer a recess is provided
• mounting the chip module in the recess, in such a way that said two lower conductive contact zones of the chip module are electrically connected to the two contact terminals (14) of the first antenna
• connecting a second antenna to said two upper conductive contact zone of the chip module.

10. Method of manufacturing according to claim 9, wherein the second antenna is reported on the lower surface of a second substrate, the second antenna having two contact terminals, and wherein then the second substrate is mounted on the layer such that said two upper conductive contact zones of the chip module are electrically connected to the two contact terminals of the second antenna.

11. Method of manufacturing according to claim 9, wherein the second antenna is printed over the upper surface of the layer, whereby two contact terminals of the second antenna are each printed directly on one of the two upper conductive contact zones of the chip module in order to achieve electrical connection between the second antenna and the chip module.

12. Method of manufacturing a contactless transponder unit according to claim 7, the method of manufacturing comprising the following steps:
• fixing a chip module in a recess of an insulating layer in such a way that the two upper and two lower conductive contact zones are substantially even with the upper or the lower surface of the layer respectively
• printing a first antenna over the upper surface of the layer, whereby two contact terminals of the first antenna are each printed directly on one of said two upper conductive contact zones of the chip module in order to achieve an electrical connection between the first antenna and the chip module,
• printing a second antenna over the lower surface of the layer, whereby two contact terminals of the second antenna are each printed directly on one of said two lower conductive contact zones of the chip module in order to achieve an electrical connection between the second antenna and the chip module.
